**Europäisches Patentamt**

(19) **European Patent Office**

**Office européen des brevets**

(11) Veröffentlichungsnummer: **0 029 406**

**A1**

(12) # EUROPÄISCHE PATENTANMELDUNG

(21) Anmeldenummer: **80730070.2**

(22) Anmeldetag: **04.11.80**

(51) Int. Cl.³: **H 01 B 7/32,** H 02 H 5/10

(30) Priorität: **09.11.79 DE 2945842**

(43) Veröffentlichungstag der Anmeldung: **27.05.81**
**Patentblatt 81/21**

(84) Benannte Vertragsstaaten: **AT BE CH DE FR GB IT LI NL
SE**

(71) Anmelder: **SIEMENS AKTIENGESELLSCHAFT Berlin
und München, Postfach 22 02 61,
D-8000 München 22 (DE)**

(72) Erfinder: **Carl, Arnd-Günther, Jean-Paul-Allee 1,
D-8632 Neustadt (DE)**
Erfinder: **Schräpler, Herbert, Feldstrasse 8,
D-8631 Ahorn (DE)**
Erfinder: **Barnicol-Ottler, Max, Wildenheider Strasse 1,
D-8632 Neustadt (DE)**
Erfinder: **Korn, Gerhard, Friedensstrasse 5,
D-8632 Neustadt (DE)**
Erfinder: **Düssel, Klaus, v.-Würtzburg-Strasse 13,
D-8621 Mitwitz (DE)**

(54) **Flexible elektrische Anschlussleitung mit Schutzeinrichtung.**

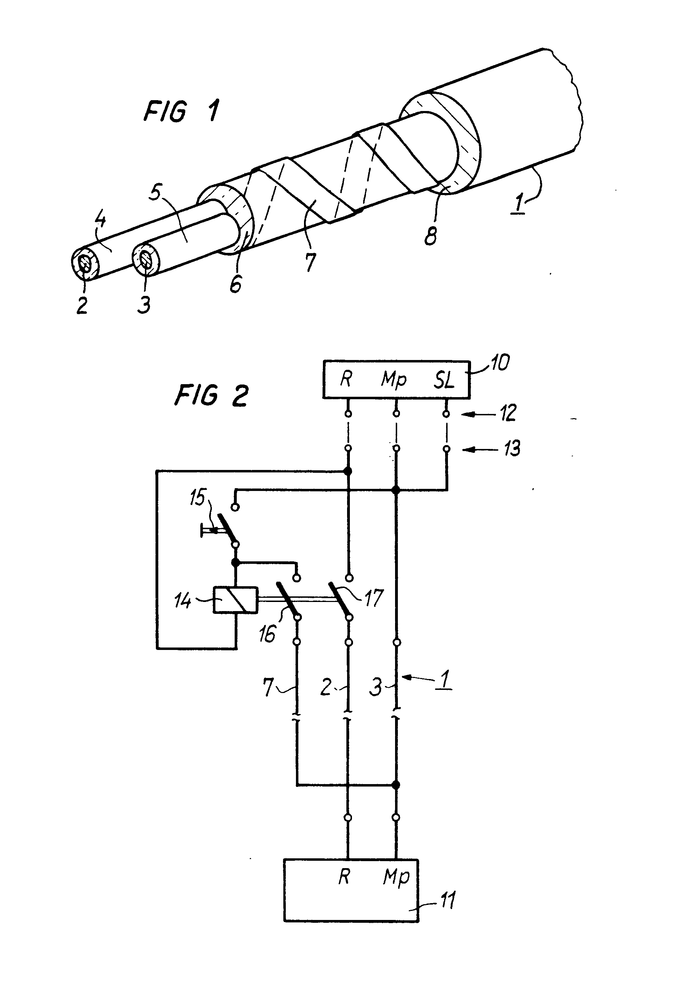

(57) Um die flexible elektrische Anschlußleitung (1) von ortsveränderlichen Schneidwerkzeugen (11) bei Beschädigung der Isolierung des Phasenleiters (2) vom Starkstromnetz (10) zu trennen, ist dem Stecker der Anschlußleitung ein Relais (14) zugeordnet, das beim Druchtrennen eines die Adern (2, 3) der Anschlußleitung wendelförmig umgebenden Überwachungsleiters (7) den Phasenleiter auftrennt. Hierzu ist der Überwachungsleiter geräteseitig mit dem Null- bzw. Schutz- oder Erdleiter elektrisch verbunden. Das Relais (14) ist mit seinem einen Pol mit dem Phasenleiter und mit dem anderen Pol mit dem Überwachungsleiter verbunden und weist zwei Arbeitskontakte (16, 17) auf, von denen der eine im Strompfad des Überwachungsleiters und der andere im Strompfad des Phasenleiters liegt. Der dem Überwachungsleiter zugeordnete Arbeitskontakt ist mittels eines an den Null- bzw. Schutz- oder Erdleiter des Starkstromnetzes anschließbaren Tasters (15) kurzschließbar (Fig. 2).

0029406

BEZEICHNUNG GEÄNDERT
siehe Titelseite

SIEMENS AKTIENGESELLSCHAFT          Unser Zeichen
Berlin und München                 VPA 79 P 4733 BRD

**Flexible elektrische Leitung mit Schutzeinrichtung**

Die Erfindung liegt auf dem Gebiet der flexiblen elektrischen Leitungen, die zum Anschluß eines ortsveränderlichen Schneidwerkzeuges an ein Starkstromnetz an einem Ende mit einem Stecker versehen sind, und ist bei der konstruktiven Ausgestaltung solcher Leitungen zur Verbesserung der Betriebssicherheit anzuwenden.

Beim Betrieb elektrisch betriebener Schneidwerkzeuge, wie Rasenmäher, Handscheren oder Sägen, kann es durch unvorsichtiges Handhaben zu einer Beschädigung der elektrischen Anschlußleitung kommen, die nicht zum Durchtrennen des Phasenleiters führt und damit vom Benutzer unbemerkt bleiben kann. Bei einer Berührung dieser schadhaften Stelle kann ein für den menschlichen Körper unzulässig hoher Fehlerstrom fließen.

Der Erfindung liegt die Aufgabe zugrunde, die mit einem Stecker zum Anschluß eines ortsveränderlichen Schneidwerk-

Zm 3 Win / 5.11.1979

zeuges an ein Starkstromnetz an einem Ende mit einem Stecker versehene mehradrige flexible elektrische Leitung so auszugestalten, daß bei einer bis zur Isolierung des Phasenleiters reichenden Beschädigung der Anschlußleitung die Betriebsspannung abgeschaltet wird.

Zur Lösung dieser Aufgabe ist erfindungsgemäß vorgesehen, daß die Adern von einem als offene Wendel aufgesponnenen Überwachungsleiter umgeben sind, daß der Überwachungsleiter geräteseitig mit dem Null- bzw. Schutz- oder Erdleiter elektrisch verbunden ist, daß der Überwachungsleiter steckerseitig an den einen Pol eines mit wenigstens zwei Arbeitskontakten versehenen Relais geschaltet ist, dessen anderer Pol mit dem Phasenleiter der Anschlußleitung verbunden ist, wobei der eine Arbeitskontakt im Strompfad des Überwachungsleiters und der andere Arbeitskontakt im Strompfad des Phasenleiters liegt, und daß der dem Überwachungsleiter zugeordnete Arbeitskontakt steckerseitig mittels eines an den Null- bzw. Schutz- oder Erdleiter des Starkstromnetzes anschließbaren Tasters kurzschließbar ist.

Bei einer derart ausgebildeten Anschlußleitung mit im wesentlichen aus dem Relais bestehender Überwachungseinrichtung ist gewährleistet, daß mit Hilfe des Relais bei einem Durchtrennen des die Adern wendelförmig umgebenden Überwachungsleiters der Phasenleiter unterbrochen und damit die Anschlußleitung von der Netzspannung befreit wird.

Bei der konstruktiven Ausgestaltung der Anschlußleitung im Hinblick auf die Überwachungseinrichtung kann man derart vorgehen, daß das Relais und der Taster in einem dem Stecker zugeordneten Adapter angeordnet sind. Es erscheint aber besonders zweckmäßig, das Relais und den Taster innerhalb des Steckergehäuses anzuordnen, so daß die Anschlußleitung mit der Überwachungseinrichtung eine untrennbare Einheit bildet.

Bei der konstruktiven Ausgestaltung des Überwachungsleiters ist zu berücksichtigen, daß dieser bei einem Eindringen des Schneidwerkzeuges in die Leitung durchtrennt
werden muß, damit das Relais stromlos und damit der Strompfad des Phasenleiters aufgetrennt wird. Um gleichzeitig
die mechanischen Eigenschaften der Leitung durch den Überwachungsleiter nicht übermäßig zu beeinträchtigen, empfiehlt es sich, den Überwachungsleiter in Form eines Metallbandes auf den Innenmantel der Leitung aufzubringen.
Das Metallband kann dabei blank oder auch mit einem Isolierstoffüberzug verwendet werden. Es ist zweckmäßig, dem
Metallband eine Breite von etwa 2 bis 3 mm zu geben und
es mit einer Schlaglänge von etwa 25 bis 30 mm aufzuspinnen. Sofern man auf einen Innenmantel verzichtet und statt
dessen eine Lückenfüllung und eine Folienbespinnung vorsieht, empfiehlt sich mit Rücksicht auf die Flexibilität
der Leitung ein Überwachungsleiter in Form eines feindrähtigen flachen Leiters, der unmittelbar auf die Folienbespinnung aufgebracht wird. Ein solcher Überwachungsleiter sollte etwa 1,5 mm breit sein und mit einer Schlaglänge von etwa 10 bis 15 mm aufgesponnen sein.

Ausführungsbeispiele der neuen Anschlußleitung sind in
den Fig. 1 bis 6 dargestellt. Dabei zeigen die Fig. 1, 3
und 4 ein Stufenmuster der elektrischen Leitung und die
Fig. 2, 5 und 6 drei Schaltschemen im Zusammenwirken mit
dem Relais und dem Taster.

Fig. 1 zeigt eine zweiadrige Leitung 1 mit dem Phasenleiter 2 und dem Mittelpunktsleiter 3. Auf die miteinander
verseilten Adern 4 und 5 ist zunächst der Innenmantel 6
aufgebracht. Auf diesen Innenmantel ist der Überwachungsleiter 7 in Form einer offenen Wendel aufgesponnen. Der
Überwachungsleiter besteht aus einem Kupferband mit einer
Bandbreite von etwa 3 mm und ist mit einer Schlaglänge von

Zm 3 Lo / 27.10.1980

25 mm aufgesponnen. Der mit dem Überwachungsleiter 7 versehene Innenmantel ist schließlich vom Außenmantel 8 umgeben.

Bei der dargestellten Leitung handelt es sich demnach um eine modifizierte zweiadrige Kunststoff- oder Gummischlauchleitung.

In Fig. 2 ist das Schaltschema für den Anschluß eines Schneidwerkzeuges 11 an ein Starkstromnetz 10 mittels einer flexiblen elektrischen Leitung 1 wiedergegeben. Das Starkstromnetz 10 endet auf einer Steckdose 12 mit Kontakten für den Phasenleiter R, den Mittelpunktsleiter $M_p$ und den Schutzleiter SL. In diese Steckdose sind die Kontaktstifte 13 eines nicht näher bezeichneten codierten Steckers einführbar, in dessen Gehäuse das Relais 14 und der Taster 15 angeordnet sind und an den die flexible Leitung 1 angeschlossen ist.

Das Relais 14 liegt mit seinem einen Pol an dem dem Phasenleiter R des Starkstromnetzes zugeordneten Steckerstift und ist mit seinem anderen Pol einerseits über den Taster 15 an den Mittelpunktsleiter $M_p$ und den damit verbundenen Schutzleiter SL und andererseits über den Arbeitskontakt 16 des Relais 14 und den Überwachungsleiter 7 der Leitung 1 an den Mittelpunktsleiter 3 der Leitung 1 angeschlossen. Ein weiterer Arbeitskontakt 17 des Relais 14 liegt im Strompfad des Phasenleiters 2 der Leitung 1.

Zur Inbetriebnahme des Gerätes 11 wird der Taster 15 betätigt. Demzufolge spricht das Relais 14 an, und die Kontakte 16 und 17 gehen in Arbeitsstellung. Mittels des Kontaktes 16 hält sich das Relais 14 selbst. Bei einem Durchtrennen des Überwachungsleiters 7 wird das Relais 14 stromlos, so daß die Kontakte 16 und 17 öffnen. Der Kontakt 17 schaltet den Phasenleiter 2 vom Starkstromnetz 10 ab.

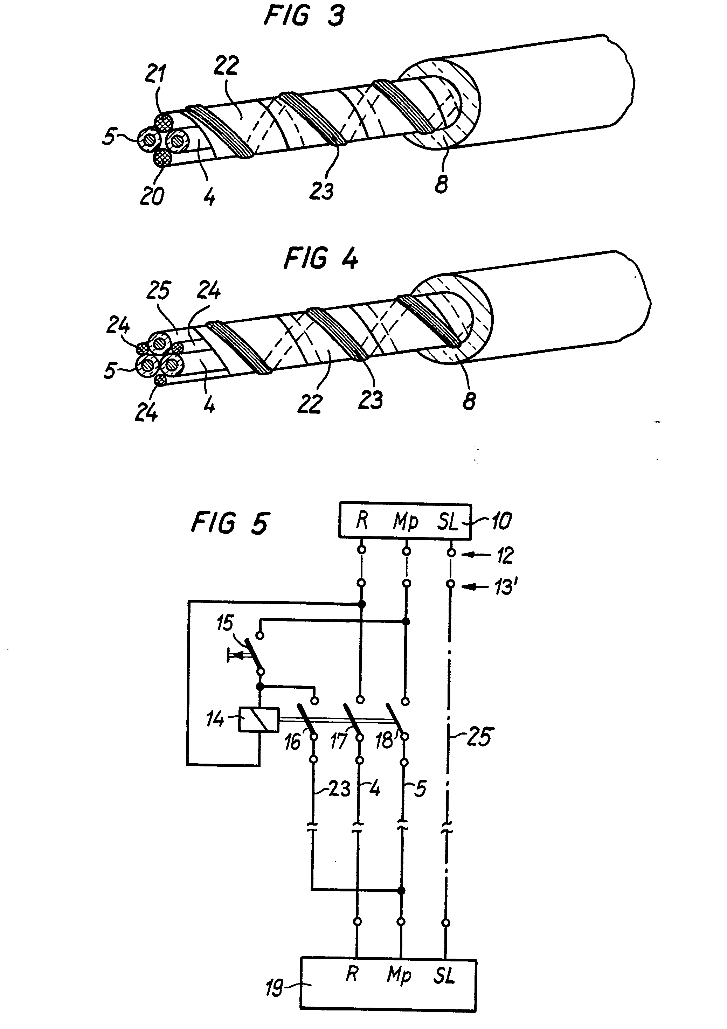

Fig. 3 zeigt eine zweiadrige Leitung, bei der die Lücken der verseilten Adern 4 und 5 mit der Lückenfüllung 20 und 21 gefüllt und der derart gebildete Verseilverband von einer Folienbespinnung 22 umgeben ist. Hierauf ist der Überwachungsleiter 23 aufgesponnen, der aus einem flachen feindrähtigen Kupferleiter in blanker oder isolierter Ausführung besteht. Zwischen dem Verseilverband und dem Überwachungsleiter einerseits und dem Außenmantel 8 andererseits kann noch eine Trennfolie vorgesehen sein.

Die dreiadrige Leitung gemäß Fig. 4 entspricht in ihrem Aufbau der Leitung gemäß Fig. 3 bei Verwendung einer dritten Ader 25 als Schutzleiter und der im Durchmesser etwas kleiner gehaltenen Lückenfüllungen 24.

Fig. 5 zeigt ein gegenüber Fig. 2 etwas geändertes Schaltschema, bei dem im übrigen eine dreiadrige Leitung gemäß Fig. 4 verwendet ist. Hierbei ist der Schutzleiter 25 bis zum Schneidwerkzeug 19 durchverbunden. Das Relais 14 ist mit einem weiteren Arbeitskontakt 18 ausgerüstet, der im Strompfad des Nulleiters 5 liegt. Bei dieser Schaltung kann der Stecker 13' als normaler, nichtcodierter Stecker ausgeführt sein, denn bei einer Vertauschung des Phasenleiters und des Nulleiters in der Steckdose werden im Störungsfall beide abgeschaltet.

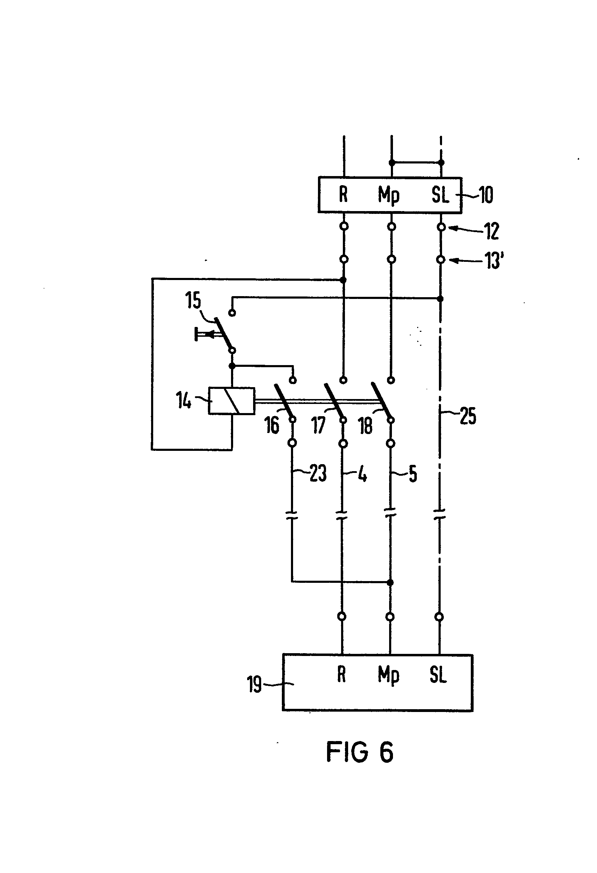

Bei der Schaltung gemäß Fig. 6 ist das Relais 14 über den Taster 15 nur mit dem Schutzleiter 25 verbunden. Hierdurch ist eine Vertauschung von Phasenleiter und Nulleiter ausgeschlossen, da im Fall einer Vertauschung das Relais 14 nicht betätigt werden kann.

6 Figuren

7 Ansprüche

Zm 3 Lo / 27.10.1980

Patentansprüche

1. Mehradrige flexible elektrische Leitung, die zum Anschluß eines ortsveränderlichen Schneidwerkzeuges an ein Starkstromnetz an einem Ende mit einem Stecker versehen ist, d a d u r c h   g e k e n n z e i c h n e t , daß die Adern (2,3) von einem als offene Wendel aufgesponnenen Überwachungsleiter (7) umgeben sind, daß der Überwachungsleiter geräteseitig mit dem Null- bzw. Schutz- oder Erdleiter (3) elektrisch verbunden ist, daß der Überwachungsleiter steckerseitig an den einen Pol eines mit wenigstens zwei Arbeitskontakten (16,17) versehenen Relais (14) geschaltet ist, dessen anderer Pol mit dem Phasenleiter der Anschlußleitung verbunden ist, wobei der eine Arbeitskontakt (16) im Strompfad des Überwachungsleiters und der andere Arbeitskontakt im Strompfad des Phasenleiters (17) liegt, und daß der dem Überwachungsleiter zugeordnete Arbeitskontakt (16) steckerseitig mittels eines an den Null- bzw. Schutz- oder Erdleiter ($M_p$, SL) des Starkstromnetzes (10) anschließbaren Tasters (15) kurzschließbar ist.

2. Anschlußleitung nach Anspruch 1, d a d u r c h   g e k e n n z e i c h n e t ,   daß das Relais (14) und der Taster (15) in einem dem Stecker zugeordneten Adapter angeordnet sind.

3. Anschlußleitung nach Anspruch 1, d a d u r c h   g e k e n n z e i c h n e t ,   daß das Relais (14) und der Taster (15) innerhalb des Steckergehäuses angeordnet sind.

Zm 3 Win / 5.11.1979

4. Anschlußleitung nach einem der Ansprüche 1 bis 3, d a d u r c h   g e k e n n z e i c h n e t , daß der Überwachungsleiter in Form eines Metallbandes (7) auf den Innenmantel (6) der Leitung aufgebracht ist.

5. Anschlußleitung nach einem der Ansprüche 1 bis 4, d a d u r c h   g e k e n n z e i c h n e t , daß der als Metallband ausgebildete Überwachungsleiter (7) eine Bandbreite von etwa 2 bis 3 mm und eine Schlaglänge von etwa 25 bis 30 mm aufweist.

6. Anschlußleitung nach einem der Ansprüche 1 bis 3, d a d u r c h   g e k e n n z e i c h n e t ,  daß der Überwachungsleiter in Form eines feindrähtigen flachen Leiters (23) unmittelbar auf die mit einer Lückenfüllung (20, 21) und einer Folienbespinnung (22) versehenen, verseilten Adern (4, 5) aufgebracht ist.

7. Anschlußleitung nach Anspruch 6,   d a d u r c h   g e k e n n z e i c h n e t ,  daß der Überwachungsleiter (23) eine Breite von etwa 1,5 mm aufweist und mit einer Schlaglänge von 10 bis 15 mm aufgesponnen ist.

Zm 3 Lo / 29.8.1980

FIG 1

FIG 2

**FIG 3**

**FIG 4**

**FIG 5**

FIG 6

0029406

Nummer der Anmeldung

**Europäisches Patentamt**

# EUROPÄISCHER RECHERCHENBERICHT

EP 80730070.2

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>DE - A1 - 2 230 398</u> (PHILIPS) + Gesamt + -- | 1-3 |
| | <u>AT - B - 310 478</u> (WOLF) + Seiten 3,4; Fig. 3A, 3B + -- | 1,3,6 |
| | <u>DE - A1 - 1 463 456</u> (GUTEHOFFNUNGS- HÜTTE) + Gesamt + -- | 1,6 |
| A | <u>AT - B - 313 398</u> (FELTEN & GUILLEAUME) + Seite 2 + -- | 1,3 |
| A | <u>US - A - 3 588 776</u> (LEWIS) + Gesamt + -- | 4 |
| A | <u>GB - A - 747 288</u> (FULGOR) ---- | 4,6 |

### KLASSIFIKATION DER ANMELDUNG (Int. Cl.³)

H 01 B  7/32
H 02 H  5/10

### RECHERCHIERTE SACHGEBIETE (Int. Cl.³)

H 01 B  7/00
H 02 H  3/00
H 02 H  5/00
H 02 H  7/00
H 01 R 13/00
H 01 R 19/00
A 01 D 53/00
A 01 D 69/00
A 01 G  3/00
B 23 D 49/00
B 26 B 15/00
B 26 B 19/00
B 26 B 29/00
B 27 B 17/00
B 27 B 19/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 23-01-1981 | KUTZELNIGG |

EPA form 1503.1  06.78